# EUROPEAN PATENT APPLICATION

(11) **EP 4 451 767 A1**
(43) Date of publication of application: **23.10.2024**
(21) Application number: 22906444.9
(22) Date of filing: 09.12.2022
(51) Int. Cl.: H04W 72/04

(54) **REFERENCE DETERMINATION METHOD AND APPARATUS, AND COMMUNICATION DEVICE AND READABLE STORAGE MEDIUM**

(30) Priority: 13.12.2021 CN 202111521970
(71) Applicant: VIVO MOBILE COMMUNICATION CO., LTD., Dongguan, Guangdong 523863 (CN)
(72) Inventor: LI, Dongru, Dongguan, Guangdong 523863 (CN); WU, Kai, Dongguan, Guangdong 523863 (CN)
(74) Representative: Murgitroyd & Company
(86) International application number: PCT/CN2022/138131
(87) International publication number: WO 2023/109697

(57) **Abstract**

This application discloses a reference determining method and apparatus, a communication device, and a readable storage medium, and pertains to the field of communication technologies. The reference determining method according to embodiments of this application includes: obtaining, by a communication device, first information, where the first information is used for configuring a plurality of associated PDCCH candidates; and determining, by the communication device based on the first information, a first reference for at least one of the following: application delay for a PDCCH monitoring adaptation indication; start or restart of a timer related to a search space set group; and application delay for a discontinuous reception DRX start offset indication. The first reference is related to a first PDCCH candidate. The plurality of associated PDCCH candidates include the first PDCCH candidate.

## Description

### CROSS-REFERENCE TO RELATED APPLICATIONS

This application claims priority to Chinese Patent Application No. 202111521970.2, filed in China on December 13, 2021, which is incorporated herein by reference in its entirety.

### TECHNICAL FIELD

This application pertains to the field of communication technologies and specifically relates to a reference determining method and apparatus, a communication device, and a readable storage medium.

### BACKGROUND

In current communication technologies, terminals are unable to determine the application delay or effective reference point for at least one of physical downlink control channel (Physical Downlink Control Channel, PDCCH) monitoring adaptation indication and discontinuous reception (Discontinuous Reception, DRX) start offset indication. As a result, this leads to inconsistent understanding of at least one of these two indications between a terminal and a network-side device, causing poor communication reliability.

### SUMMARY

Embodiments of this application provide a reference determining method and apparatus, a communication device, and a readable storage medium, so as to solve the problem of inconsistent understanding of the application reference point or application delay reference point for at least one of PDCCH monitoring adaptation indication and DRX start offset indication between a terminal and a network side, which otherwise leads to poor communication reliability.

According to a first aspect, a reference determining method is provided. The reference determining method includes: obtaining, by a communication device, first information, where the first information is used for configuring multiple associated PDCCH candidates; and determining, by the communication device based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate.

According to a second aspect, a reference determining apparatus is provided. The apparatus includes an obtaining module and a determining module. The obtaining module is configured to obtain first information, where the first information is used for configuring multiple associated PDCCH candidates. The determining module is configured to determine, based on the first information obtained by the obtaining module, a first reference for at least one of the following: application delay for a PDCCH monitoring adaptation indication; start or restart of a timer related to a search space set group; and application delay for a discontinuous reception DRX start offset indication. The first reference is related to a first PDCCH candidate. The multiple associated PDCCH candidates include the first PDCCH candidate.

According to a third aspect, a communication device is provided, where the communication device includes a processor and a memory, the memory stores a program or instructions executable on the processor, and when the program or instructions are executed by the processor, the steps of the method according to the first aspect are implemented.

According to a fourth aspect, a communication device is provided, including a processor and a communication interface. The processor is configured to: obtain first information, where the first information is used for configuring multiple associated PDCCH candidates; and determine, based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate.

According to a fifth aspect, a readable storage medium is provided, where the readable storage medium stores a program or instructions, and when the program or instructions are executed by a processor, the steps of the method according to the first aspect are implemented, or the steps of the method according to the third aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program or program product is provided, where the computer program or program product is stored in a storage medium, and the computer program or program product is executed by at least one processor so as to implement the method according to the first aspect.

In the embodiments of this application, the communication device obtains first information, where the first information is used for configuring multiple associated PDCCH candidates; and determines, based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate. With this method, the terminal can determine, based on the first information, the first reference for the application delay for the PDCCH monitoring adaptation indication, the start or restart of the timer related to the search space set group, and the application delay for the discontinuous reception DRX start offset indication, ensuring consistent understanding between the terminal and the network side, and improving network reliability and robustness.

### BRIEF DESCRIPTION OF DRAWINGS

FIG. 1 is a possible schematic structural diagram of a communication system according to an embodiment of this application;
FIG. 2 is a first schematic flowchart of a reference determining method according to an embodiment of this application;
FIG. 3 is a schematic diagram of PDCCH repetition according to an embodiment of this application;
FIG. 4 is a possible schematic structural diagram of a reference determining apparatus according to an embodiment of this application;
FIG. 5 is a schematic diagram of a hardware structure of a communication device according to an embodiment of this application;
FIG. 6 is a schematic diagram of a hardware structure of a terminal according to an embodiment of this application; and
FIG. 7 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than the NR system application, for example, to the 6th generation (6th Generation, 6G) communication system.

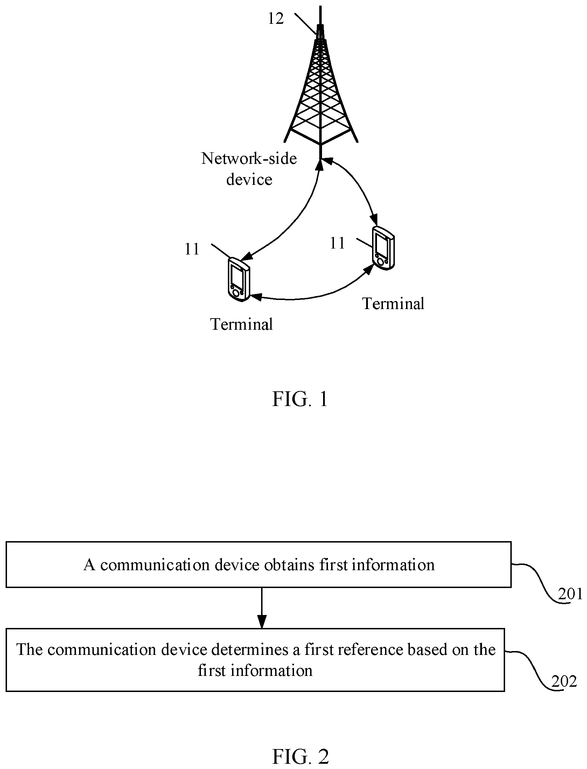

FIG. 1 is a block diagram of a wireless communication system to which the embodiments of this application are applicable. The wireless communication system includes a terminal 11 and a network-side device 12. The terminal 11 may be a mobile phone, tablet personal computer (Tablet Personal Computer), laptop computer (Laptop Computer) also known as a notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device), vehicle user equipment (VUE), pedestrian user equipment (PUE), smart home device (wireless communication-enabled home devices such as refrigerators, televisions, washing machines, or furniture), gaming console, personal computer (personal computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the terminal 11 is not limited to any particular type in the embodiments of this application. The network-side device 12 may include an access network device or core network device, where the access network device 12 may also be referred to as a radio access network device, radio access network (Radio Access Network, RAN), radio access network function, or radio access network unit. The access network device 12 may include base stations, WLAN access points, WiFi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effects are achieved, the base station is not limited to any specific technical terminology. It should be noted that in the embodiments of this application, only the base station in the NR system is introduced as an example, and the specific type of the base station is not limited.

The following describes some of the terms included in the embodiments of the present invention.

PDCCH monitoring adaptation indication (PDCCH adaptation indication) is used to indicate PDCCH skipping (PDCCH skipping) and/or search space set group switching (SSSG switching).

The PDCCH monitoring adaptation indication may be applied to a specific type of PDCCH. The specific type of PDCCH may be PDCCH for a type 3 common search space (CSS) and/or a user-specific search space (USS).

A search space set group (SS set group) may be not related to any search space (which can be understood as a search space set), or related to at least one search space.

In addition, when a search space set group timer (SSSG timer) expires, a terminal switches to a default search space set group (default SSSG) or search space set group #0.

DRX start offset adjustment indication is also known as DRX start offset indication. A DRX start offset indication may be used to indicate a start subframe of a target DRX cycle duration, a relative offset of a start position of a target DRX cycle duration, or the like.

The following describes in detail the reference determining method provided in the embodiments of this application through some embodiments and application scenarios thereof with reference to the accompanying drawings.

FIG. 2 is a flowchart of a reference determining method according to an embodiment of this application. As shown in FIG. 2, the reference determining method provided in this embodiment of this application may include the following steps 201 and 202.

Step 201. A communication device obtains first information.

The communication device includes at least one of the following: a terminal and a network-side device.

It should be noted that the reference determining method provided in this embodiment of this application is applicable to both terminals and network-side devices.

The first information is used for configuring at least one of the following: multiple associated downlink physical control channel PDCCH candidates and multiple associated PDCCH monitoring occasions (PDCCH MOs).

In an embodiment of this application, multiple associated downlink physical control channel PDCCH candidates are used as an example. In addition, it can be understood that multiple associated PDCCH monitoring occasions may also be applicable to subsequent embodiments. Details are not described herein.

In this embodiment of this application, the first information includes configuration information of multiple associated PDCCH candidates.

In an embodiment of this application, the multiple associated PDCCH candidates include at least two PDCCH candidates.

It should be noted that PDCCH candidates (or referred to as candidate PDCCHs) are all possible locations where PDCCH may appear, including a set of PDCCH candidates on all search spaces configured by a network.

In an embodiment of this application, the multiple associated PDCCH monitoring occasions include at least two PDCCH monitoring occasions.

For example, the network-side device may send same DCI on any one or more PDCCH candidates among the multiple associated PDCCH candidates. It can also be understood that the terminal may assume that DCI received on the multiple associated PDCCH candidates is the same DCI. For ease of description, the multiple associated PDCCH candidates in this example are referred to as PDCCH repetitions, that is, PDCCHs that are transmitted as repetitions.

Step 202. The communication device determines a first reference based on the first information.

The first reference includes a first reference for at least one of the following:
application delay for a PDCCH monitoring adaptation indication;
start or restart of a timer related to a search space set group;
application delay for a discontinuous reception DRX start offset indication;
effectiveness or application of a PDCCH monitoring adaptation indication;
effectiveness or application of a DRX start offset indication; and
application delay for a minimum KO/K2 indication, where K0 refers to a slot-level distance between a PDCCH and a PDSCH scheduled by the PDCCH, for example, K0 = 1 slot, and K2 refers to a slot-level distance between the PDCCH and a PUSCH scheduled by the PDCCH, for example, K2 = 1 slot.

The first reference is related to a first PDCCH candidate, and the multiple associated PDCCH candidates include the first PDCCH candidate.

It should be noted that the timer related to a search space set group can be understood as a timer related to switching of the search space set group. Multiple search space set groups may share the same timer, or different search space set groups may each have their specific timer.

In a possible embodiment, the first reference is used for determining at least one of the following: a starting time of the application delay for the PDCCH monitoring adaptation indication, a starting or restarting time of the timer related to the search space set group, a starting time of the application delay for the DRX start offset indication, an effectiveness or application (starting) time of the PDCCH monitoring adaptation indication, an effectiveness or application (starting) time of the DRX start offset indication, and a starting time of the application delay for the minimum KO/K2 indication.

For example, in a case that the first reference is used for determining the effectiveness or application starting time of the PDCCH monitoring adaptation indication, the application delay for the PDCCH monitoring adaptation indication may be equal to 0.

In an embodiment of this application, the first PDCCH candidate may be one PDCCH candidate in the multiple associated PDCCH candidates. For example, in a case of PDCCH repetition, the first PDCCH candidate may be one PDCCH candidate in the multiple PDCCH candidates for repetitions.

For the reference determining method in embodiments of this application, the communication device obtains first information, where the first information is used for configuring multiple associated PDCCH candidates; and determines, based on the first information, a first reference for at least one of the following: application delay for a PDCCH monitoring adaptation indication; start or restart of a timer related to a search space set group; application delay for a discontinuous reception DRX start offset indication; effectiveness or application of a PDCCH monitoring adaptation indication; and effectiveness or application of a DRX start offset indication; where the first reference is related to a first PDCCH candidate, and the multiple associated PDCCH candidates include the first PDCCH candidate. With this method, in a case that communication devices include both a terminal and a network-side device, the terminal and the network-side device can determine, based on the first information, the first reference for the application delay for the PDCCH monitoring adaptation indication, the start or restart of the timer related to the search space set group, and the application delay for the discontinuous reception DRX start offset indication, ensuring consistent understanding between the terminal and the network side, and improving network reliability and robustness.

In some possible embodiments, the first reference includes at least one of a reference point and a reference PDCCH candidate, where the reference PDCCH candidate is the first PDCCH candidate.

Optionally, the first reference (reference) is used for at least one of the following: the application delay for the PDCCH monitoring adaptation indication, the start or restart of the timer related to the search space set group, the application delay for the DRX start offset indication, the PDCCH monitoring adaptation indication, and the DRX start offset indication.

Optionally, the first PDCCH candidate is the earliest or latest PDCCH candidate in time among the multiple associated PDCCH candidates.

For example, in a case of PDCCH repetition, the first PDCCH candidate may correspond to the earliest or latest PDCCH candidate in time among the multiple PDCCH candidates for repetitions.

In some other possible embodiments, the first reference includes a reference PDCCH monitoring occasion.

Optionally, the reference PDCCH monitoring occasion is the earliest or latest PDCCH monitoring occasion in time among the multiple associated PDCCH monitoring occasions.

In this way, with the configuration of multiple associated PDCCH candidates, the terminal takes the earliest or latest PDCCH candidate in time among the multiple associated PDCCH candidates as the reference for determining at least one of the application delay for the PDCCH monitoring adaptation indication, the start or restart of the timer related to the search space set group, and the application delay for the discontinuous reception DRX start offset indication. This allows the terminal to determine, for example, in a case of PDCCH repetition, a start position of the application delay for the PDCCH monitoring adaptation indication or a starting time for the start or restart of the timer related to the search space set group, the application time of the PDCCH monitoring adaptation indication, the application time of the DRX start offset indication, and the like, avoiding inconsistent understanding between the terminal and the network side, and improving the network reliability and robustness.

Optionally, in an embodiment of this application, in a case that the first reference includes a reference point, the reference point includes at least one of the following:
the reference point being a starting time or ending time of a first time unit in which the first PDCCH candidate is located; and
the reference point being a starting time or ending time of a next time unit following the first time unit in which the first PDCCH candidate is located.

Optionally, the first time unit is at least one of the following: a symbol (symbol), a slot (slot), a millisecond (ms), a radio frame, and a subframe (subframe).

For example, in a case of no interval between the first time unit and the next time unit of the first time unit, the ending time of the first time unit is the starting time of the next time unit.

Taking the first PDCCH candidate being the latest PDCCH candidate in time among the multiple associated PDCCH candidates as an example, the reference point is described in examples as follows:

In an example, in a case of PDCCH repetition, the reference point is a starting time of the slot in which the latest PDCCH candidate in time among the multiple PDCCH candidates for repetitions is located.

In another example, in a case of PDCCH repetition, the reference point is a starting time of a next slot following the slot in which the latest PDCCH candidate in time among the multiple PDCCH candidates for repetitions is located.

In still another example, in a case of PDCCH repetition, the reference point is an ending time of a next slot following the slot in which the latest PDCCH candidate in time among the multiple PDCCH candidates for repetitions is located.

In some optional embodiments, the reference point may include at least one of the following:
a starting time or ending time of a first time unit in which a first PDCCH monitoring occasion is located; and
a starting time or ending time of a next time unit following the first time unit in which the first PDCCH monitoring occasion is located.

Optionally, the first PDCCH monitoring occasion is the earliest or latest PDCCH monitoring occasion in time among the multiple associated PDCCH monitoring occasions.

Taking the first PDCCH monitoring occasion being the earliest PDCCH monitoring occasion in time among the multiple associated PDCCH monitoring occasions as an example, the reference point is described in examples as follows:

In an example, in a case of PDCCH repetition, the reference point is a starting time of the slot in which the earliest PDCCH monitoring occasion in time among the multiple associated PDCCH monitoring occasions for repetitions is located.

In this way, in the case of PDCCH repetition, the communication device takes the first PDCCH candidate in the multiple associated PDCCH candidates or the starting time or ending time of the time unit (for example, slot) in which the first PDCCH monitoring occasion in the multiple associated PDCCH monitoring occasions is located as the reference point for determining the application delay for the PDCCH monitoring adaptation indication, the timer related to the search space set group, and the application delay for the DRX start offset adjustment indication, thereby ensuring consistent understanding between the terminal and the network side, and improving the network reliability and robustness.

Optionally, a value of the first time unit in a first case and in a second case are different, where the first case includes that a time span occupied by the multiple associated PDCCH candidates does not exceed one slot, and the second case includes that a time span occupied by the multiple associated PDCCH candidates exceeds one slot. In other words, the value of the first time unit in the case that the time span occupied by the multiple associated PDCCH candidates does not exceed one slot is different from the value of the first time unit in the case that the time span occupied by the multiple associated PDCCH candidates exceeds one slot.

For example, that the time span occupied by the multiple associated PDCCH candidates does not exceed one slot can be understood as: the multiple associated PDCCH candidates are transmitted as repetitions within one slot (that is, Intra slot repetition); and that the time span occupied by the multiple associated PDCCH candidates exceeds one slot can be understood as: the multiple associated PDCCH candidates are transmitted as repetitions across multiple slots (that is, Inter slot repetition).

For example, in a case of PDCCH repetition, if multiple PDCCHs are transmitted as repetitions within one slot, the first time unit may be slot; or if multiple PDCCHs are transmitted as repetitions within three slots, the first time unit may be millisecond.

In some possible embodiments, a value of the first time unit in a first case and in a second case are different, where the first case includes that a time span occupied by the multiple associated PDCCH candidates does not exceed one slot, and the second case includes that a time span occupied by the multiple associated PDCCH candidates exceeds one slot. In other words, the first time unit in the case that the time span occupied by the multiple associated PDCCH monitoring occasions does not exceed one slot is different from the first time unit in the case that the time span occupied by the multiple associated PDCCH monitoring occasions exceeds one slot.

In this way, the terminal can determine granularity of the first time unit based on the time span occupied by the multiple associated PDCCH candidates or PDCCH monitoring occasions, that is, using different time unit granularities for different time spans occupied, so as to improve network transmission performance.

Optionally, in an embodiment of this application, DCI corresponding to a PDCCH carried on the multiple associated PDCCH candidates includes at least one of the PDCCH monitoring adaptation indication and the DRX start offset indication.

For example, the DCI corresponding to the PDCCH carried on the multiple associated PDCCH candidates can be understood as: DCI corresponding to one or more PDCCHs detected by the terminal among the multiple associated PDCCH candidates.

For example, in a case of PDCCH repetition, downlink control information DCI carried on a PDCCH detected by the terminal among the multiple associated PDCCH candidates includes at least one of the PDCCH monitoring adaptation indication and the DRX start offset indication.

It should be noted that in the case of PDCCH repetition, the DCI corresponding to the PDCCH carried on the multiple associated PDCCH candidates is the same.

In this way, in a case that at least one of the PDCCH monitoring adaptation indication and the DRX start offset indications is transmitted over the multiple associated PDCCH candidates, the method for determining a first reference point proposed in this application can avoid the problem of poor transmission reliability and the like caused by inconsistent understanding between the terminal and the network side.

Optionally, in an embodiment of this application, that the terminal determines, based on the first information, a first reference for application delay for a PDCCH monitoring adaptation indication in step 202 may include the following step 203a.

Step 203a. The communication device determines, based on the first reference, a starting time of the application delay for the PDCCH monitoring adaptation indication.

Optionally, the PDCCH monitoring adaptation indication includes at least one of the following: a PDCCH skipping indication and a search space set group switching indication.

For example, in a case that the PDCCH monitoring adaptation indication includes a PDCCH skipping indication, the PDCCH monitoring adaptation indication is used for the terminal to determine not to monitor a specific type of PDCCH within a time segment.

For example, in a case that the PDCCH monitoring adaptation indication includes a search space set group switching indication, the PDCCH monitoring adaptation indication is used for the terminal to obtain a search space set group switching indication, allowing the terminal to perform PDCCH monitoring on a corresponding activated search space set group according to the search space set group switching indication.

The following uses the communication device being a terminal as an example to further describe the reference determining method provided in this application.

Optionally, the terminal determines, based on the first reference, a starting time of the application delay for the PDCCH monitoring adaptation indication. The terminal enters the application delay for the PDCCH monitoring adaptation indication at the starting time.

For example, the first reference being a reference point is used as an example. The terminal determines, based on the reference point, the starting time of the application delay for the PDCCH monitoring adaptation indication, and enters (or starts) the application delay for the PDCCH monitoring adaptation indication at the starting time.

For example, in a case that the first reference is a starting time of a slot in which the first PDCCH candidate is located, the terminal enters the application delay for the PDCCH monitoring adaptation indication at the starting time of the slot in which the first PDCCH candidate is located.

Optionally, at the end of the application delay for the PDCCH monitoring adaptation indication, the PDCCH monitoring adaptation indication starts to take effect or apply.

The following uses the communication device being a terminal as an example to further describe the reference determining method provided in this application.

In an example, the terminal determines an ending time of a symbol in which the latest PDCCH candidate in time among the multiple associated PDCCH candidates as the reference point for the application delay for the PDCCH monitoring adaptation indication. The application delay for the PDCCH monitoring adaptation indication starts after the reference point, and the PDCCH adaptation indication takes effect at the end of the application delay for the PDCCH monitoring adaptation indication.

In another example, the terminal determines an ending time of a symbol in which the last PDCCH MO in time among the multiple associated PDCCH MOs as the reference point for the application delay for the PDCCH monitoring adaptation indication. The application delay for the PDCCH monitoring adaptation indication starts after the reference point, and the PDCCH adaptation indication takes effect at the end of the application delay for the PDCCH monitoring adaptation indication.

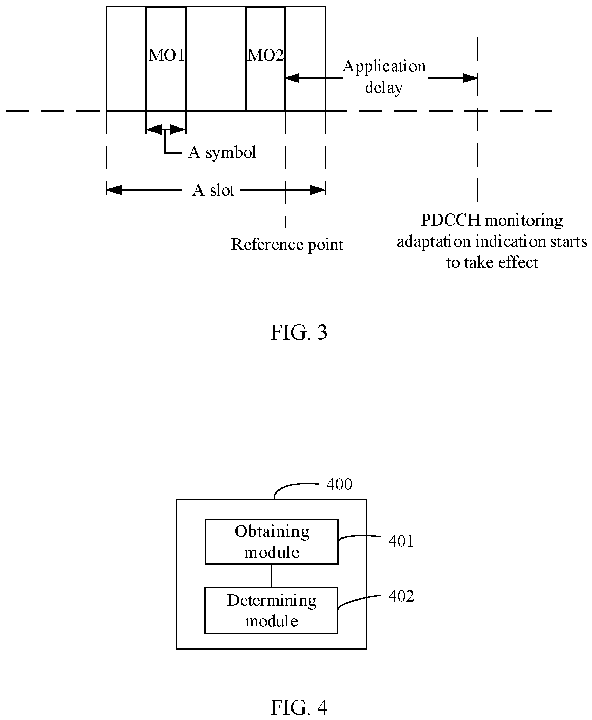

For example, as shown in FIG. 3, the terminal performs PDCCH repetition on two PDCCH MOs (MO1 and MO2). UE determines an ending time of a symbol in which MO2 is located as the reference point (that is, reference point), or the UE considers MO2 as a reference MO. The UE determines, based on the reference point or reference MO, the starting time of the application delay (that is, application delay). The terminal enters the application delay at the determined starting time, and at the end of the application delay, the PDCCH adaptation indication (that is, application adaptation indication) starts to take effect. MO1 and MO2 are located within one slot (that is, a slot), MO1 and MO2 each occupy one symbol (that is, a symbol), and DCI corresponding to the PDCCH carried on MO1 and MO2 carries the same PDCCH monitoring adaptation indication.

It can be understood that replacing the PDCCH MO in the above example with PDCCH candidate is also feasible, in which case PDCCH candidate 2 is the reference PDCCH candidate. Details are not described herein.

For another example, in a case of PDCCH repetition, the multiple associated PDCCH candidates include two PDCCH candidates. The terminal determines an ending time of a symbol in which the second PDCCH candidate is located as the reference point (that is, reference point). The application delay starts after the reference point, and at the end of the application delay, the PDCCH adaptation indication (that is, adaptation indication) starts to take effect.

In this way, the terminal starts the application delay for the PDCCH monitoring adaptation indication after the reference point, and enables the PDCCH monitoring adaptation indication to take effect at the end of the application delay for the PDCCH monitoring adaptation indication, improving the network reliability and robustness.

Optionally, in an embodiment of this application, that the terminal determines, based on the first information, a first reference for start or restart of a timer related to a search space set group in step 202 may include the following step 203b.

Step 203b. The communication device determines, based on the first reference, a starting time or restarting time of the timer related to the search space set group.

The following uses the communication device being a terminal as an example to describe the reference determining method provided in this application.

Optionally, the terminal determines, based on the first reference, the starting time of the timer related to the search space set group. The terminal starts the timer related to the search space set group at the starting time.

For example, in a case of PDCCH repetition, the multiple associated PDCCH candidates include two PDCCH candidates. The terminal determines an ending time of a symbol in which the second PDCCH candidate is located as the reference point (that is, reference point), and starts the timer related to the search space set group at the starting time determined based on the reference point.

In this way, the terminal starts the timer related to the search space set group at the starting time determined based on the reference point, improving the network reliability and robustness.

Optionally, in an embodiment of this application, that the terminal determines, based on the first information, a first reference for application delay for a DRX start offset indication in step 202 may include the following step 203c.

Step 203c. The communication device determines, based on the first reference, a starting time of the application delay for the DRX start offset indication.

The following uses the communication device being a terminal as an example to describe the reference determining method provided in this application.

Optionally, the terminal determines, based on the first reference, the starting time of the application delay for the DRX start offset indication. The terminal enters the application delay for the PDCCH monitoring adaptation indication at the starting time.

For example, in a case of PDCCH repetition, the multiple associated PDCCH candidates include two PDCCH candidates. The terminal determines an ending time of a symbol in which the second PDCCH candidate is located as the reference point (that is, reference point), and starts the application delay for the DRX start offset indication at the starting time of the application delay determined based on the reference point.

In this way, the terminal starts the application delay for the DRX start offset indication after the reference point, avoiding inconsistent understanding between the terminal and the network side, and improving the network reliability and robustness.

Optionally, in an embodiment of this application, that the terminal determines, based on the first information, a first reference for effectiveness or application of a PDCCH monitoring adaptation indication in step 202 may include the following step 203d.

Step 203d. The communication device determines, based on the first reference, an effectiveness or application time of the PDCCH monitoring adaptation indication.

The following uses the communication device being a terminal as an example to describe the reference determining method provided in this application.

Optionally, the terminal determines, based on the first reference, the effectiveness or application time of the PDCCH monitoring adaptation indication. The PDCCH monitoring adaptation indication starts to take effect or apply at the effectiveness or application time.

For example, in a case of PDCCH repetition, the multiple associated PDCCH candidates include two PDCCH candidates. The terminal determines an ending time of a symbol in which the second PDCCH candidate is located as the reference point (that is, reference point), and the PDCCH monitoring adaptation indication starts to take effect at the effectiveness time determined based on the reference point.

In this way, the terminal determines the effectiveness or application of the PDCCH monitoring adaptation indication after the reference point, avoiding inconsistent understanding between the terminal and the network side, and improving the network reliability and robustness.

Optionally, in an embodiment of this application, that the terminal determines, based on the first information, a first reference for effectiveness or application of a DRX start offset indication in step 202 may include the following step 203e.

Step 203e. The communication device determines, based on the first reference, an effectiveness or application time of the DRX start offset indication.

The following uses the communication device being a terminal as an example to describe the reference determining method provided in this application.

Optionally, the terminal determines, based on the first reference, the effectiveness or application time of the DRX start offset indication. The DRX start offset indication starts to take effect or apply at the effectiveness or application time.

For example, in a case of PDCCH repetition, the multiple associated PDCCH candidates include two PDCCH candidates. The terminal determines a starting time of a symbol in which the first PDCCH candidate is located as the reference point, (that is, reference point), and the DRX start offset indication starts to take effect at the effectiveness time determined based on the reference point.

In this way, the terminal determines the effectiveness or application of the PDCCH monitoring adaptation indication after the reference point, avoiding inconsistent understanding between the terminal and the network side, and improving the network reliability and robustness.

The reference determining method provided in the embodiments of this application can be executed by a reference determining apparatus. In the embodiments of this application, the reference determining method being executed by the reference determining apparatus is used as an example to describe the reference determining apparatus according to the embodiments of this application.

FIG.4 is a possible schematic structural diagram of a reference determining apparatus according to an embodiment of this application. The apparatus includes an obtaining module 401 and a determining module 402. The obtaining module 401 is configured to obtain first information, where the first information is used for configuring multiple associated PDCCH candidates. The determining module 402 is configured to determine, based on the first information obtained by the obtaining module 401, a first reference for at least one of the following:
application delay for a PDCCH monitoring adaptation indication;
start or restart of a timer related to a search space set group; and
application delay for a discontinuous reception DRX start offset indication; where
the first reference is related to a first PDCCH candidate, and the multiple associated PDCCH candidates include the first PDCCH candidate.

For the reference determining apparatus in this embodiment of this application, the reference determining apparatus obtains first information, where the first information is used for configuring multiple associated PDCCH candidates; and determines, based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate. With this method, in a case of PDCCH repetition, the reference determining apparatus can determine, based on the first information, a reference point for the application delay for the PDCCH monitoring adaptation indication, the start or restart of the timer related to the search space set group, and the application delay for the discontinuous reception DRX start offset indication, ensuring consistent understanding between the terminal and the network side, and improving network reliability and robustness.

Optionally, in this embodiment of this application, the first reference includes at least one of a reference point and a reference PDCCH candidate, where the reference PDCCH candidate includes the first PDCCH candidate.

Optionally, in this embodiment of this application, in a case that the first reference includes a reference point, the reference point includes at least one of the following:
the reference point being a starting time or ending time of a first time unit in which the first PDCCH candidate is located; and
the reference point being a starting time or ending time of a next time unit following the first time unit in which the first PDCCH candidate is located.

In this way, in the case of PDCCH repetition, the terminal takes the first PDCCH candidate in the multiple PDCCH candidates or the starting time or ending time of the time unit (for example, slot) in which the first PDCCH monitoring occasion in the multiple PDCCH monitoring occasions is located as the reference point for determining the application delay for the PDCCH monitoring adaptation indication, the timer related to the search space set group, and the application delay for the DRX start offset adjustment indication, thereby specifying the occasion for entering the application delay and stating the timer, ensuring consistent understanding between the terminal and the network side, and improving the network reliability and robustness.

Optionally, in this embodiment of this application, the first PDCCH candidate is the earliest or latest PDCCH candidate in time among the multiple associated PDCCH candidates.

In this way, in the case of PDCCH repetition, the terminal takes the earliest or latest PDCCH in time among the repeated PDCCHs as the reference for the application delay for the PDCCH monitoring adaptation indication, the start or restart of the timer related to the search space set group, and the application delay for the discontinuous reception DRX start offset indication. This allows the terminal to determine, in the case of PDCCH repetition, when to enter the application delay for the PDCCH monitoring adaptation indication and when to start or restart the timer related to the search space set group, avoiding inconsistent understanding between the terminal and the network side, and improving the network reliability and robustness.

Optionally, in this embodiment of this application, the determining module is further configured to determine, based on the first reference, a starting time of the application delay for the PDCCH monitoring adaptation indication.

In this way, the terminal starts the application delay for the PDCCH monitoring adaptation indication after the reference point, and enables the PDCCH monitoring adaptation indication to take effect at the end of the application delay for the PDCCH monitoring adaptation indication, improving the network reliability and robustness.

Optionally, in this embodiment of this application, the determining module is further configured to determine, based on the first reference, a starting time or restarting time of the timer related to the search space set group.

In this way, the terminal starts the timer related to the search space set group after the reference point, improving the network reliability and robustness.

Optionally, in this embodiment of this application, the determining module is further configured to determine, based on the first reference, a starting time of the application delay for the DRX start offset indication.

In this way, the terminal starts the application delay for the DRX start offset indication after the reference point, avoiding inconsistent understanding between the terminal and the network side, and improving the network reliability and robustness.

Optionally, in this embodiment of this application, the PDCCH monitoring adaptation indication includes at least one of the following: a PDCCH skipping indication and a search space set group switching indication.

Optionally, in this embodiment of this application, DCI corresponding to a PDCCH carried on the multiple associated PDCCH candidates includes at least one of the PDCCH monitoring adaptation indication and the DRX start offset indication.

Optionally, in this embodiment of this application, the first time unit may be at least one of a symbol, slot, a millisecond, a subframe, and a radio frame.

Optionally, in this embodiment of this application, a value of the first time unit in a first case and in a second case are different, the first case includes that a time span occupied by the multiple associated PDCCH candidates does not exceed one slot, and the second case includes that a time span occupied by the multiple associated PDCCH candidates exceeds one slot. In other words, the value of the first time unit in the case that the time span occupied by the multiple associated PDCCH candidates does not exceed one slot is different from the value of the first time unit in the case that the time span occupied by the multiple associated PDCCH candidates exceeds one slot.

In this way, the terminal can determine granularity of the first time unit based on the time span occupied by the multiple associated PDCCH candidates or PDCCH monitoring occasions, that is, using different time unit granularities in a case of different time spans occupied, so as to improve network transmission performance.

It should be noted that with respect to the reference determining method provided in the embodiments of this application, a terminal device and a network-side device have the same understanding. To be specific, the reference determining method provided in the embodiments of this application is also applicable to network-side devices. Details are not described herein.

The reference determining apparatus in the embodiments of this application may be an electronic device, for example, an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The reference determining apparatus provided in this embodiment of this application can implement the processes implemented in the method embodiments of FIGs. 1 to 3 with the same technical effects achieved. To avoid repetition, details are not described herein again.

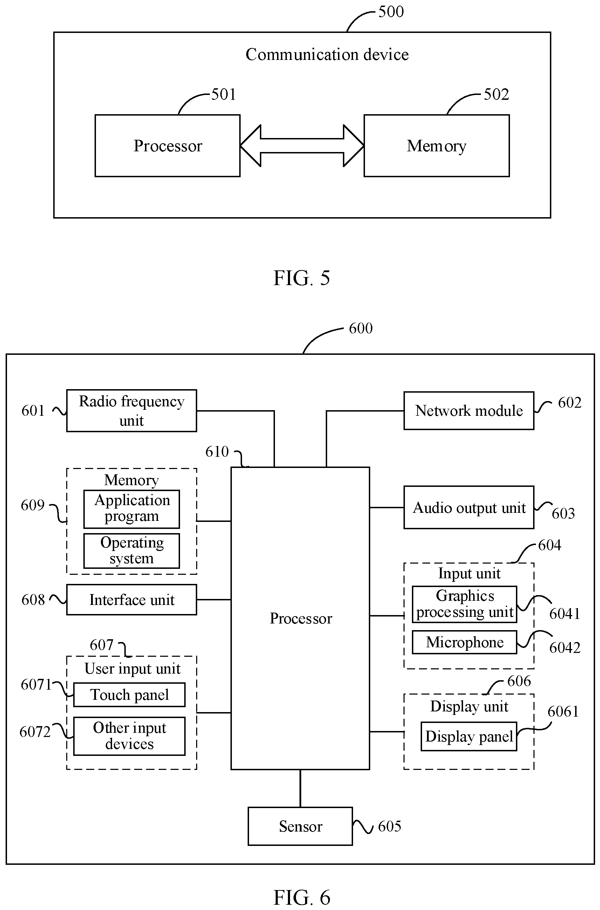

Optionally, as shown in FIG. 5, an embodiment of this application further provides a communication device 500 including a processor 501, and a memory 502, the memory 502 stores a program or instructions executable on the processor 501. For example, in a case that the communication device 500 is a terminal, when the program or instructions are executed by the processor 501, the steps in the foregoing embodiments of the reference determining method are implemented, with the same technical effects achieved. In a case that the communication device 500 is a network-side device, the program or instructions are executed by the processor 501 to implement the steps in the foregoing embodiments of the reference determining method, with the same technical effects achieved. To avoid repetition, details are not described herein again.

An embodiment of this application further provides a terminal including a processor and a communication interface. The processor is configured to: obtain first information, where the first information is used for configuring multiple associated PDCCH candidates; and determine, based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate. This terminal embodiment corresponds to the foregoing method embodiment on the terminal side. All processes and implementations in the foregoing method embodiment can be applicable to this terminal embodiment, with the same technical effects achieved. Specifically, FIG. 6 is a schematic diagram of a hardware structure of a terminal implementing the embodiments of this application.

The terminal 600 includes but is not limited to at least part of these components: a radio frequency unit 601, a network module 602, an audio output unit 603, an input unit 604, a sensor 605, a display unit 606, a user input unit 607, an interface unit 608, a memory 609, a processor 610, and the like.

It can be understood by those skilled in the art that the terminal 600 may further include a power supply (for example, battery) supplying power to the components. The power supply may be logically connected to the processor 610 via a power management system, so that functions such as charge management, discharge management, and power consumption management are implemented via the power management system. The structure of the terminal shown in FIG. 6 does not constitute any limitation on the terminal, and the terminal may include more or fewer components than shown in the figure, or combine some of the components, or have different arrangements of the components. Details are not described herein.

It should be understood that the input unit 604 may include a graphics processing unit (Graphics Processing Unit, GPU) 6041 and a microphone 6042. The graphics processing unit 6041 processes image data of still pictures or videos that are obtained by an image capture apparatus (for example, camera) in an image or video capture mode. The display unit 606 may include a display panel 6061. The display panel 6061 may be configured in a form of a liquid crystal display, an organic light-emitting diode display, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. Specifically, the other input devices 6072 may include but are not limited to a physical keyboard, a function button (for example, volume control button or on/off button), a trackball, a mouse, and a joystick. Details are not described herein.

In an embodiment of this application, the radio frequency unit 601 receives downlink data from a network-side device and transfers the data to the processor 610 for processing; and the radio frequency unit 601 can additionally send uplink data to the network-side device. Generally, the radio frequency unit 601 includes but is not limited to an antenna, an amplifier, a transceiver, a coupler, a low noise amplifier, and a duplexer.

The memory 609 may be configured to store software programs or instructions and various data. The memory 609 may include a first storage are for storing programs or instructions and a second storage area for storing data. The first storage area may store an operating system, an application program or instructions required by at least one function (for example, a sound playback function or an image playback function), and the like. Additionally, the memory 609 may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in the embodiments of this application includes but is not be limited to these and any other applicable types of memories.

The processor 610 may include one or more processing units. Optionally, the processor 610 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 610.

The processor 610 is configured to obtain first information, where the first information is used for configuring multiple associated PDCCH candidates. The processor 601 is configured to determine, based on the first information obtained, a first reference for at least one of the following:
application delay for a PDCCH monitoring adaptation indication;
start or restart of a timer related to a search space set group; and
application delay for a discontinuous reception DRX start offset indication; where
the first reference is related to a first PDCCH candidate, and the multiple associated PDCCH candidates include the first PDCCH candidate.

For the terminal provided in the embodiments of this application, the terminal obtains first information, where the first information is used for configuring multiple associated PDCCH candidates; and determines, based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate. With this method, in a case of PDCCH repetition, the terminal can determine, based on the first information, a reference point for the application delay for the PDCCH monitoring adaptation indication, the start or restart of the timer related to the search space set group, and the application delay for the discontinuous reception DRX start offset indication, ensuring consistent understanding between the terminal and the network side, and improving the network reliability and robustness.

Optionally, in this embodiment of this application, the first reference includes at least one of a reference point and a reference PDCCH candidate, where the reference PDCCH candidate is the first PDCCH candidate.

Optionally, in this embodiment of this application, in a case that the first reference includes a reference point, the reference point includes at least one of the following:
the reference point being a starting time or ending time of a first time unit in which the first PDCCH candidate is located; and
the reference point being a starting time or ending time of a next time unit following the first time unit in which the first PDCCH candidate is located.

In this way, in the case of PDCCH repetition, the terminal takes the first PDCCH candidate in the multiple PDCCH candidates or the starting time or ending time of the time unit (for example, slot) in which the first PDCCH monitoring occasion in the multiple PDCCH monitoring occasions is located as the reference point for determining the application delay for the PDCCH monitoring adaptation indication, the timer related to the search space set group, and the application delay for the DRX start offset adjustment indication, thereby specifying the occasion for entering the application delay and stating the timer, ensuring consistent understanding between the terminal and the network side, and improving the network reliability and robustness.

Optionally, in this embodiment of this application, the first PDCCH candidate is the earliest or latest PDCCH candidate in time among the multiple associated PDCCH candidates.

In this way, in the case of PDCCH repetition, the terminal takes the earliest or latest PDCCH in time among the repeated PDCCHs as the reference for the application delay for the PDCCH monitoring adaptation indication, the start or restart of the timer related to the search space set group, and the application delay for the discontinuous reception DRX start offset indication. This allows the terminal to determine, in the case of PDCCH repetition, when to enter the application delay for the PDCCH monitoring adaptation indication and when to start or restart the timer related to the search space set group, avoiding inconsistent understanding between the terminal and the network side, and improving the network reliability and robustness.

Optionally, in this embodiment of this application, the processor 610 is further configured to determine, based on the first reference, a starting time of the application delay for the PDCCH monitoring adaptation indication.

In this way, the terminal starts the application delay for the PDCCH monitoring adaptation indication after the reference point, and enables the PDCCH monitoring adaptation indication to take effect at the end of the application delay for the PDCCH monitoring adaptation indication, improving the network reliability and robustness.

Optionally, in this embodiment of this application, the processor 601 is further configured to determine, based on the first reference, a starting time or restarting time of the timer related to the search space set group.

In this way, the terminal starts the timer related to the search space set group after the reference point, improving the network reliability and robustness.

Optionally, in this embodiment of this application, the processor 601 is further configured to determine, based on the first reference, a starting time of the application delay for the DRX start offset indication.

In this way, the terminal starts the application delay for the DRX start offset indication after the reference point, avoiding inconsistent understanding between the terminal and the network side, and improving the network reliability and robustness.

Optionally, in this embodiment of this application, the PDCCH monitoring adaptation indication includes at least one of the following: a PDCCH skipping indication and a search space set group switching indication.

Optionally, in this embodiment of this application, DCI corresponding to a PDCCH carried on the multiple associated PDCCH candidates includes at least one of the PDCCH monitoring adaptation indication and the DRX start offset indication.

Optionally, in this embodiment of this application, the first time unit may be at least one of a symbol, a slot, a millisecond, a subframe, and a radio frame.

Optionally, in this embodiment of this application, a value of the first time unit in a first case and in a second case are different, the first case includes that a time span occupied by the multiple associated PDCCH candidates does not exceed one slot, and the second case includes that a time span occupied by the multiple associated PDCCH candidates exceeds one slot. In other words, the value of the first time unit in the case that the time span occupied by the multiple associated PDCCH candidates does not exceed one slot is different from the value of the first time unit in the case that the time span occupied by the multiple associated PDCCH candidates exceeds one slot.

In this way, the terminal can determine granularity of the first time unit based on the time span occupied by the multiple associated PDCCH candidates or PDCCH monitoring occasions, that is, using different time unit granularities in a case of different time spans occupied, so as to improve network transmission performance.

An embodiment of this application further provides a network-side device including a processor and a communication interface. The processor is configured to: obtain first information, where the first information is used for configuring multiple associated PDCCH candidates; and determine, based on the first information, a first reference for at least one of the following: application delay for a PDCCH monitoring adaptation indication; start or restart of a timer related to a search space set group; and application delay for a discontinuous reception DRX start offset indication; where the first reference is related to a first PDCCH candidate, and the multiple associated PDCCH candidates include the first PDCCH candidate. This network-side device embodiment corresponds to the foregoing reference determining method embodiment. All processes and implementations in the foregoing method embodiment can be applicable to this network-side device embodiment, with the same technical effects achieved.

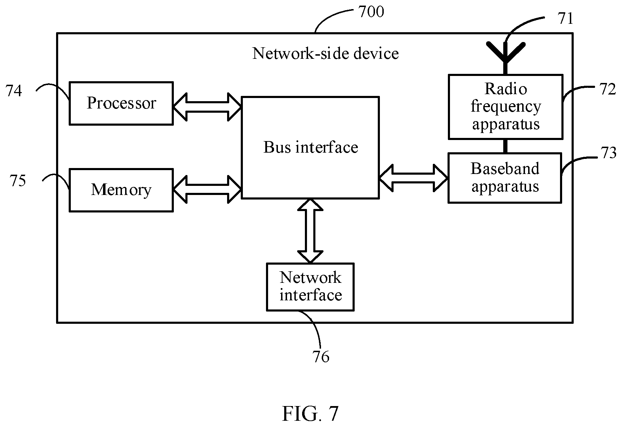

Specifically, an embodiment of this application further provides a network-side device. As shown in FIG. 7, the network-side device 700 includes an antenna 71, a radio frequency apparatus 72, a baseband apparatus 73, a processor 74, and a memory 75. The antenna 71 is connected to the radio frequency apparatus 72. Uplink, the radio frequency apparatus 72 receives information through the antenna 71, and sends the received information to the baseband apparatus 73 for processing. Downlink, the baseband apparatus 73 processes to-be-sent information, and sends the information to the radio frequency apparatus 72; and the radio frequency apparatus 72 processes the received information and then sends the information out through the antenna 71.

The method executed by the network-side device in the aforesaid embodiments may be implemented on the baseband apparatus 73. The baseband apparatus 73 includes a baseband processor.

The baseband apparatus 73 may include, for example, at least one baseband board, where multiple chips are disposed on the baseband board. As shown in FIG. 7, one of the chips is, for example, a baseband processor, connected to the memory 75 through a bus interface, to invoke a program in the memory 75 to perform the operations of the network-side device shown in the foregoing method embodiment.

The network-side device may further include a network interface 76, where the interface is, for example, a common public radio interface (common public radio interface, CPRI).

Specifically, the network-side device 700 in this embodiment of the present invention further includes: an instruction or program stored in the memory 75 and executable on the processor 74. The processor 74 invokes the instruction or program in the memory 75 to execute the method executed by the modules shown in FIG. 7, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing reference determining method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the processes of the foregoing reference determining method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program or program product, where the computer program or program product is stored in a storage medium, and the computer program product is executed by at least one processor to implement the processes of the foregoing reference determining method embodiments, with the same technical effects achieved. To avoid repetition, details are not described herein again.

An embodiment of this application further provides a system including a terminal and a network-side device. The terminal may be configured to execute the steps of the foregoing reference determining method, and the network-side device may be configured to execute the steps of the foregoing reference determining method.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A reference determining method, wherein the method comprises:
obtaining, by a communication device, first information, wherein the first information is used for configuring a plurality of associated physical downlink control channel PDCCH candidates, and the communication device comprises at least one of the following: a terminal and a network-side device; and
determining, by the communication device based on the first information, a first reference for at least one of the following:
application delay for a PDCCH monitoring adaptation indication;
start or restart of a timer related to a search space set group; and
application delay for a discontinuous reception DRX start offset indication; wherein
the first reference is related to a first PDCCH candidate, and the plurality of associated PDCCH candidates comprise the first PDCCH candidate.

2. The method according to claim 1, wherein the first reference comprises at least one of a reference point and a reference PDCCH candidate, the reference PDCCH candidate being the first PDCCH candidate.

3. The method according to claim 2, wherein in a case that the first reference comprises a reference point, the reference point comprises at least one of the following:
the reference point being a starting time or ending time of a first time unit in which the first PDCCH candidate is located; and
the reference point being a starting time or ending time of a next time unit following the first time unit in which the first PDCCH candidate is located.

4. The method according to claim 1, wherein the first PDCCH candidate is an earliest or a latest PDCCH candidate in time among the plurality of associated PDCCH candidates.

5. The method according to any one of claims 1 to 4, wherein the determining, by the communication device based on the first information, a first reference for application delay for a PDCCH monitoring adaptation indication comprises:
determining, by the communication device based on the first reference, a starting time of the application delay for the PDCCH monitoring adaptation indication.

6. The method according to any one of claims 1 to 4, wherein the determining, by the communication device based on the first information, a first reference for start or restart of a timer related to a search space set group comprises:
determining, by the communication device based on the first reference, a starting time or restarting time of the timer related to the search space set group.

7. The method according to any one of claims 1 to 4, wherein the determining, by the communication device based on the first information, a first reference for application delay for a DRX start offset indication comprises:
determining, by the communication device based on the first reference, a starting time of the application delay for the DRX start offset indication.

8. The method according to claim 1, wherein the PDCCH monitoring adaptation indication comprises at least one of the following: a PDCCH skipping indication and a search space set group switching indication.

9. The method according to claim 1, wherein downlink control information DCI of a PDCCH carried on the plurality of associated PDCCH candidates comprises at least one of the PDCCH monitoring adaptation indication and the DRX start offset indication.

10. The method according to claim 3, wherein the first time unit is at least one of: a symbol, a slot, a millisecond, a subframe, and a radio frame.

11. The method according to claim 10, wherein a value of the first time unit in a first case and in a second case are different, wherein the first case comprises that a time span occupied by the plurality of associated PDCCH candidates does not exceed one slot, and the second case comprises that a time span occupied by the plurality of associated PDCCH candidates exceeds one slot.

12. A reference determining apparatus, wherein the apparatus comprises an obtaining module and a determining module, wherein
the obtaining module is configured to obtain first information, wherein the first information is used for configuring a plurality of associated PDCCH candidates; and
the determining module is configured to determine, based on the first information obtained by the obtaining module, a first reference for at least one of the following:
application delay for a PDCCH monitoring adaptation indication;
start or restart of a timer related to a search space set group; and
application delay for a discontinuous reception DRX start offset indication; wherein
the first reference is related to a first PDCCH candidate, and the plurality of associated PDCCH candidates comprise the first PDCCH candidate.

13. The apparatus according to claim 12, wherein the first reference comprises at least one of a reference point and a reference PDCCH candidate, the reference PDCCH candidate comprising the first PDCCH candidate.

14. The apparatus according to claim 13, wherein in a case that the first reference comprises a reference point, the reference point comprises at least one of the following:
the reference point being a starting time or ending time of a first time unit in which the first PDCCH candidate is located; and
the reference point being a starting time or ending time of a next time unit following the first time unit in which the first PDCCH candidate is located.

15. The apparatus according to claim 12, wherein the first PDCCH candidate is an earliest or a latest PDCCH candidate in time among the plurality of associated PDCCH candidates.

16. The apparatus according to any one of claims 12 to 15, wherein
the determining module is further configured to determine, based on the first reference, a starting time of the application delay for the PDCCH monitoring adaptation indication.

17. The apparatus according to any one of claims 12 to 15, wherein
the determining module is further configured to determine, based on the first reference, a starting time or restarting time of the timer related to the search space set group.

18. The apparatus according to any one of claims 12 to 15, wherein
the determining module is further configured to determine, based on the first reference, a starting time of the application delay for the DRX start offset indication.

19. The apparatus according to claim 12, wherein the PDCCH monitoring adaptation indication comprises at least one of the following: a PDCCH skipping indication and a search space set group switching indication.

20. The apparatus according to claim 12, wherein DCI corresponding to a PDCCH carried on the plurality of associated PDCCH candidates comprises at least one of the PDCCH monitoring adaptation indication and the DRX start offset indication.

21. The apparatus according to claim 20, wherein the first time unit is at least one of: a symbol, a slot, a millisecond, a subframe, and a radio frame.

22. The apparatus according to claim 21, wherein a value of the first time unit in a first case and in a second case are different, the first case comprises that a time span occupied by the plurality of associated PDCCH candidates does not exceed one slot, and the second case comprises that a time span occupied by the plurality of associated PDCCH candidates exceeds one slot.

23. A communication device, comprising a processor and a memory, wherein the memory stores a program or instructions executable on the processor, and when the program or instructions are executed by the processor, the steps of the reference determining method according to any one of claims 1 to 11 are implemented.

24. A readable storage medium, wherein the readable storage medium stores a program or instructions, and when the program or instructions are executed by a processor, the steps of the reference determining method according to any one of claims 1 to 11 are implemented.
